(19) Europäisches Patentamt
European Patent Office
Office européen des brevets

(11) Publication number: **0 119 865**
**B1**

(12) # EUROPEAN PATENT SPECIFICATION

(45) Date of publication of patent specification: **02.11.88**

(51) Int. Cl.$^4$: **C 07 F 3/02**

(21) Application number: **84301880.5**

(22) Date of filing: **20.03.84**

(54) **Hydrocarbon soluble dialkylmagnesium composition.**

(30) Priority: **22.03.83 US 477720**
**01.03.84 US 583256**

(43) Date of publication of application:
**26.09.84 Bulletin 84/39**

(45) Publication of the grant of the patent:
**02.11.88 Bulletin 88/44**

(84) Designated Contracting States:
**BE DE FR GB IT NL**

(56) References cited:
**US-A-4 069 267**
**US-A-4 127 507**
**US-A-4 207 207**
**US-A-4 222 969**

(73) Proprietor: **Texas Alkyls Inc.**
**Westport, Connecticut 06881 (US)**

(72) Inventor: **Malpass, Dennis Benedict**
**10320 Rockyhollow Road**
**LaPorte Texas 77571 (US)**
Inventor: **Fannin, Loyd Wayne**
**4907 Park Avenue**
**Dickinson Texas 77539 (US)**
Inventor: **Sanchez, Ramiro**
**316 Front Street**
**Vestal New York 13850 (US)**

(74) Representative: **Smith, Sydney et al**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to hydrocarbon soluble dialkylmagnesium compounds.

Diorganomagnesium compounds are well known for their usefulness in a wide variety of chemical reactions. As reagents, these compounds can be used for the reduction of ketones, the metalation of aromatic compounds, and the alkylation of metal halides or oxides to the corresponding metal alkyls. As catalysts, diorganomagnesium compounds are useful in the dimerization and polymerization of olefins, see British Pat. 1,251,177; the polymerization of epoxides, see U.S. Pat. 3,444,102; and the preparation of telomers, see U.S. Pat. 3,742,077. While they perform many of the same types of functions performed by Grignard reagents, diorganomagnesium compounds, owing to differences in electronic and steric factors, are more reactive than Grignard reagents toward certain types of compounds. In general, see also U.S. Patents 3,646,231 and 3,822,219.

The utility of diorganomagnesium compounds is lessened by the fact that many are either solids or highly viscous liquids and all are unstable on exposure to moisture and air. This problem is generally overcome either by dissolving the compound in an inert hydrocarbon solvent or by solvating the compound and by handling under an inert atmosphere. Many diorganomagnesium compounds, particularly those with straight chain lower alkyl groups with a chain length of up to four carbon atoms, are insoluble by themselves in hydrocarbon solvents and thus require solubilizing agents which will form a soluble complex. Examples of such solubilizing agents are alkyllithium compounds, see U.S. Pat. 3,742,077; dialkyl zinc compounds, see U.S. Pat. 3,444,102; alkali metal hydrides, see U.S. Pat. 3,655,790; and organoaluminum compounds, see U.S. Pat. 3,737,393.

Solvation involves the use of an ether or an organic base molecule to associate directly with the magnesium atom, thus rendering a liquid-phase complex. The solvated form is undesirable, however, since solvation seriously inhibits the effectiveness of the compound, particularly when the compound is used as a Ziegler-type catalyst. The use of ether is particularly undesirable due to considerations of flammability and explosibility, and because it introduces soluble RMgX according to the Schlenk equilibrium

$$R_2Mg+MgX_2 \rightleftharpoons 2RMgX$$

where R is alkyl and X is halogen.

Solubilization also serves to reduce the viscosity of reaction mixtures whose high viscosity would otherwise inhibit the progress of the reaction and cause difficulty in handling and transferring. This problem is only partially solved by the use of chloroaryl solvents to form low viscosity suspensions of the insoluble compounds, as described in U.S. Pat. 3,264,360.

In addition, the insolubility of the lower alkyl magnesium compounds makes preparation of them in a form free of undesirable halides difficult. In particular, the direct reaction of magnesium metal with an organic halide is disclosed in Glaze and Selman, *Journal of Organometallic Chemistry,* Vol. 5, p. 477 (1966), and W. N. Smith, *Journal of Organometallic Chemistry,* Vol. 64, p. 25 (1974). These articles deal with the preparation of diorganomagnesium compounds having straight chain alkyl groups of 5 carbon atoms and higher. Such compounds are soluble in hydrocarbon solvents and thus separable from the concurrently produced magnesium halide and unreacted magnesium. When lower straight chain alkyls are used in this process, the desired diorganomagnesium compound is formed but is insoluble and exists as a slurry in the solvent together with the magnesium halide and unreacted magnesium metal. Thus a solubilizing agent is required when this process is used to make lower alkyl diorganomagnesium compounds. The latter are particularly desirable as reagents and catalysts owing to their relatively high magnesium content on a weight basis.

Other methods of preparation include the mercury-magnesium exchange method, as disclosed in Cowan and Mosher, *Journal of Organic Chemistry,* Vol. 27, p. 1 (1962), and the dioxanate-precipitation method, as disclosed in Schlenk, *Berichte der Deutschen Chemischen Gesellschaft,* Vol. 64, p. 734 (1931). The mercury method,

$$R_2Hg+Mg \rightarrow R_2Mg+Hg$$

where R is alkyl, is limited by the high cost of dialkylmercury compounds, and the health hazards involved in their use. The reaction itself is hazardous since it proceeds rapidly and exothermically after an inhibition period.

The dioxanate-precipitation method,

$$2RMgX+C_4H_8O_2 \xrightarrow{\text{ether}} R_2Mg+C_4H_8O_2 \cdot MgX_2 \downarrow$$

where R is alkyl and X is halogen, involves removal of magnesium halide from ether solutions of Grignard reagents by precipitation of a complex which the dioxane forms with the halide. This is a tedious process and results in an etherated dialkylmagnesium complex from which the ether must be removed prior to use as a catalyst.

Dialkylmagnesiums can also be prepared from alkyllithiums, see U.S. Pat. 3,646,231, by precipitation of lithium halide,

$$MgX_2+2LiR \rightarrow R_2Mg+2LiX$$

where R is alkyl and X is halogen. This process is unsuitable for straight-chain lower dialkylmagnesiums which are insoluble in hydrocarbon solvents, since operation will be impossible. The use of basic solvents renders separation possible but requires subsequent desolvation. This reference also discloses the use of a hydrocarbonsoluble diorganomagnesium to solubilize an insoluble diorganomagnesium. The solubilizing members shown in this reference, however, invariably contain branched chain alkyl groups. Such branched-chain diorganomagnesium compounds cannot be prepared by the Glaze and Selman method mentioned above. This fact is established in the work of Kamienski and Eastham, *Journal of Organic Chemistry,* Vol. 34, p. 1116 (1968). Thus, resort to the lithium halide precipitation method is required.

A similar process is described in U.S. Pat. 3,742,077. Again, the solubilizing agent must be a hydrocarbon soluble secondary-branched dialkylmagnesium such as di-tert-butylmagnesium or di-sec-butylmagnesium.

The general insolubility of straight chain lower alkyl magnesium compounds is thought to be due to intermolecular association resulting in the formation of a polymer-type macro-structure wherein each magnesium atom is tetrahedrally surrounded by four alkyl groups. Known methods of solubilizing these compounds presumably operate to break some of the intermolecular bonds and thereby break down the macro-structure into smaller units. Solvation or complexing as described above are thought to bring about this effect.

Alkylmagnesium compounds containing either branched-chain alkyl groups or straight-chain alkyl groups of five carbon atoms or more, known to be effective as solubilizing agents, are also thought to operate by breaking the intermolecular bonds. With alkylmagnesium compounds, however, the effect is thought to occur by way of alkyl interchange and re-association, whereby the solubilizing alkyl groups exchange positions with some of the straight-chain lower alkyls. Polymerization is thus sterically hindered, either because the substituted groups are unwieldy for a tetrahedral fit around the magnesium atom, or because the groups have some inherent solubility of their own.

U.S. Patent 4,069,267 discloses the use of longer chain dialkyl-magnesium compounds to stabilize (prevent precipitation of) di-n-butylmagnesium/di-sec-butylmagnesium and di-n-butylmagnesium/di-tert-butylmagnesium compositions. The longer chain dialkylmagnesium compounds have 6 carbons or greater in the alkyl groups, preferably 8 or 10 carbons. The process involves the use of relatively expensive branched-chain alkyllithium compounds such as sec-butyllithium and tert-butyllithium, which are added to the reaction product of n-butyl chloride with magnesium metal in the presence of a higher alkyl chloride. Though branched-chain dialkylmagnesium compounds (such as di-sec-butyl and di-tert-butylmagnesium) are known to be highly soluble in hydrocarbon solvents and serve as highly effective solubilizing agents for insoluble dialkylmagnesium compounds (such as di-n-butylmagnesium), these branched-chain magnesium alkyls cannot be made by direct reaction of the corresponding secondary or tertiary alkyl halide with magnesium metal in hydrocarbon media. Also, the three-component magnesium alkyl compositions disclosed in U.S. Pat. 4,069,267 contain two dialkylmagnesium compounds that are independently soluble in hydrocarbon solvents; hence it is not surprising that the three-component systems are highly soluble in such solvents.

Several other U.S. patents disclose hydrocarbon soluble dialkylmagnesium systems containing two or three components in which the alkyl groups are $C_1$—$C_4$ straight-chain alkyl and the alkyl groups in the different dialkylmagnesium compounds differ by more than one carbon atom.

U.S. Patent 4,127,507 describes such compositions comprising di-n-butylmagnesium and diethylmagnesium. U.S. Patent 4,207,207 describes such compositions comprising di-n-propylmagnesium and dimethylmagnesium. U.S. Patent 4,222,969 discloses such compositions comprising di-n-butylmagnesium and dimethylmagnesium. U.S. Patent 4,207,207 also describes a three-component hydrocarbon soluble magnesium alkyl system comprising di-n-propyl-, diethyl- and dimethylmagnesiums. However, yields of soluble dialkylmagnesium in this three-component system were relatively low, at most about 25%.

Additionally, when working with two-component lower alkyl magnesium compositions as described in these three patents, it has been found that best results in terms of percentage yield of a hydrocarbon soluble dialkylmagnesium composition are obtained within relatively narrow ranges of mole ratios of the starting two alkyl halides. Thus, in U.S. Patent 4,127,507 it is shown from the disclosure and particularly from Examples 2—8, that the greatest yield of soluble dialkylmagnesium composition is obtained with a mole ratio of n-butyl:ethyl chloride of between about 0.8:1 and about 1.25:1, and particularly at approximately equimolar ratios. On the other hand, when the mole ratio is varied to about 3:1 in favor of either n-butyl or ethyl chloride, the yield of soluble dialkylmagnesium drops to about one-half of that at the optimum ratio, and decreases to only a few percent yield at ratios of approximately 10:1 in favor of either chloride. Similar performance occurs with combinations of di-n-propyl/dimethyl and di-n-butyl/dimethyl magnesiums.

Furthermore, U.S. Patent 4,222,969 also discloses (Examples 3—5) that when two dialkylmagnesium

compounds differ by only one carbon atom in the alkyl groups, a hydrocarbon soluble composition is not obtained.

In some instances, depending on the process in which a hydrocarbon soluble dialkylmagnesium composition is to be utilized, it may be advantageous to prepare such a composition dominating in one of the two alkyl groups. For instance, if the dialkylmagnesium compound is to be utilized as an alkylating agent in a hydrocarbon solution environment, it would be preferable to obtain a hydrocarbon soluble composition high in the desired alkylmagnesium. In production of certain polymerization catalysts, it may also be desirable to have a dialkyl-magnesium composition high in one or another dialkyl-magnesium of such a two-component composition. If the objective is to obtain a hydrocarbon soluble dialkylmagnesium composition with a high magnesium content, it would be preferable to have such a composition predominantly comprising the dialkylmagnesium with a smaller alkyl group.

It is also desirable to provide a process for the production of such compositions.

The present invention provides a hydrocarbon solution characterised in that it comprises:

(a) di-(*n*-butyl)magnesium;

(b) diethylmagnesium;

(c) at least one further dialkylmagnesium compound in which the alkyl groups are straight-chain containing from 5 to 15 carbon atoms; and

(d) a solvent selected from aliphatic, cycloaliphatic and aromatic hydrocarbons containing from 5 to 20 carbon atoms; components (a), (b) and (c) being present in respective molar amounts of: from 70 to 93 mole percent of di-(*n*-butyl)magnesium; from 2 to 20 mole percent of diethylmagnesium; and from 5 to 25 mole percent of component (c).

Preferably, the components are present in respective molar amounts of from 70 to 93 mole percent of di(*n*-butyl)magnesium; from 2 to 20 mole percent of diethylmagnesium; and from 5 to 13 mole percent of component (c). More preferably, the components are present in respective molar amounts of from 90 to 93 mole percent di-(*n*-butyl)magnesium; from 2 to 5 mole percent of diethylmagnesium; and from 5 to 6 mole percent of component (c). Component (c) may comprise di-*n*-amylmagnesium and/or di-*n*-hexylmagnesium, for example.

The present invention also provides a process for the production of such a hydrocarbon solution which comprises:

(a) reacting, in the presence of a hydrocarbon solvent, magnesium metal with an alkyl halide in which the alkyl group is a straight-chain alkyl having from 5 to 15 carbon atoms;

(b) either simultaneously with step (a) or subsequent thereto, reacting, in the presence of the solvent of step (a), further magnesium metal with an *n*-butyl halide;

(c) either simultaneously with step (a) and/or step (b) or subsequent thereto, reacting with further magnesium metal, an ethyl halide forming a mixture of a hydrocarbon solution containing dialkylmagnesium compounds and undissolved solids; and

(d) separating the hydrocarbon solution from the undissolved solids;

all steps being conducted in a substantial absence of both moisture and oxygen.

The hydrocarbon solvent is preferably selected from aliphatic, cycloaliphatic and aromatic hydrocarbons containing from 5 to 20 carbon atoms. An alkyl chloride is preferably used as the alkyl halide.

The term "hydrocarbon solvent" is used herein to designate aliphatic, cycloaliphatic, and aromatic hydrocarbons. Illustrative of aliphatic solvents are n-pentane, iso-pentane, n-hexane, n-heptane, n-octane, isooctane, pentamethylheptane, and gasoline and other petroleum fractions. Illustrative of cycloaliphatic solvents are cyclohexane, methylcyclohexane, methylcyclopentane, cycloheptane, and cyclooctane. Illustrative of aromatic solvents are benzene, toluene, xylenes, ethylbenzene, tetralin, and methylnaphthalene. Preferred solvents are those containing 5 to 20 carbon atoms, inclusive. More preferred are those containing 6 to 15 carbon atoms, inclusive. Particularly preferred solvents are those which have boiling points between 69°C and 110°C.

The concentration of dialkylmagnesium in the solvent is not critical and the compounds are generally soluble over a wide range of concentration. The solution viscosity increases with concentration, however. For greater ease of handling, therefore, the dialkylmagnesium concentration is normally from 0.2 to 15.0 weight percent, and preferably from 1.0 to 5.0 weight percent, in terms of magnesium. However, if the solution has a higher dialkylmagnesium concentration, its viscosity can be reduced as mentioned below.

A number of techniques may be utilized for producing solutions of the multiple component dialkylmagnesium compounds in the desired hydrocarbon solvent.

In one type of process, the solution is prepared by physically combining the dialkylmagnesium compounds as such with the hydrocarbon solvent. The dialkylmagnesium compounds may be utilized in their relatively pure form, or as solids or slurries resulting from their manufacture. When utilized in either fashion, the dialkylmagnesium compounds may be in their individual states, (for instance, an insoluble form of di-n-butylmagnesium, an insoluble form of diethylmagnesium and solid di-n-hexylmagnesium) or two or more of the dialkylmagnesiums may have been prepared in combined form which is mixed according to the invention in a hydrocarbon solvent with a higher dialkylmagnesium, such as di-n-hexylmagnesium. A clear solution results which is separable from any insolubles retained with the compounds. Thus, for instance, di-n-butylmagnesium, as a solid or slurry, existing in admixture with magnesium halides, other insoluble by-products of the manufacturing process, or unreacted starting

materials, can be contacted with a hydrocarbon solvent in the presence of, for instance, diethylmagnesium and, for instance, di-n-hexylmagnesium, to produce a solution containing the dialkylmagnesium compounds as solutes, substantially free of the other ingredients. Solubilization can be hastened by heating the solution to a temperature of about 50°C or higher. The rate of solubilization increases as the temperature is raised. Once the compounds are dissolved, they will remain in solution on any subsequent lowering of temperature.

If desired, separation of the solution from the remaining undissolved solids can be enhanced by the use of any of the variety of viscosity reducing agents known in the art. Examples of such viscosity reducing agents are organoaluminum compounds such as trialkylaluminums, dialkylaluminum halides and alkylaluminum dihalides.

Alternatively, the dialkylmagnesium compounds can be prepared directly in the solvent in a common vessel by either simultaneous or subsequent reactions. Any reaction is suitable in which neither the by-products nor the unreacted starting materials are soluble in the final mixture. The insolubles can thus be easily filtered off. One such technique involves the direct reaction between metallic magnesium and the appropriate alkyl halides. The concurrently produced magnesium chloride forms a precipitate which is readily removed from the solution together with any unreacted magnesium still present. Another technique involves the use of a Grignard reagent to supply one alkyl group. The Grignard reagent is preferably freed of all ether used in its preparation prior to its use in the present reaction. The desired solution of dialkylmagnesium compounds is then obtained by reaction of the desolvated Grignard reagent with the reaction product of the other alkyl halides with magnesium metal.

When magnesium is reacted directly with an alkyl halide, commercial grade magnesium turnings or shavings can be used. It is preferable, however, to use a form of magnesium with a higher surface area than either of the above. This can be accomplished by milling, but it is most preferable to use the metal in a finely divided state, for instance, as a powder with a particle size equal to or less than about 150 microns.

If the magnesium is to be reacted sequentially with the appropriate halides, it is preferable to first react the magnesium with the halide containing the greatest number of carbon atoms, that is an alkyl halide which contains straight-chain alkyl groups of 5 or more carbon atoms, then with the alkyl halide having the next higher number of carbon atoms and so on, down to the alkyl halide having the fewest number of carbon atoms. A magnesium activating agent may be employed to initiate the reaction. Because the higher alkyl halides are more reactive with magnesium than the lower alkyl halides, some care should be taken to prevent an uncontrolled reaction. This may be achieved, for instance, by utilizing a large amount of solvent, extra agitation, a slow rate of alkyl halide addition, or further addition of excess magnesium.

The term "magnesium activating agent" is used herein to denote heat or any substance which, when contacted with magnesium, will cause the magnesium to react with the alkyl halide at a substantially faster rate. Many activating agents are known in the art. Typical examples are $AlCl_3$, $AlCl_3$-ether complexes, N,N-dimethylaniline, molecular iodine, alkyl halides of at least 3 carbon atoms, and Grignard reagents. A small quantity of a higher alkyl dialkylmagnesium, such as di-n-hexylmagnesium itself can serve as an activating agent, as mentioned in U.S. Pat. 4,207,207, Example 2.

Thermal activation may also be utilized, and is generally performed at temperatures between 125°C and 350°C, preferably from 150°C to 250°C, and most preferably from 150°C to 200°C. Once the magnesium is activated, the magnesium/alkyl halide reaction can proceed at lower temperatures. Although reaction can occur over a wide temperature range once the magnesium is activated, it will be most convenient to operate between 80°C and 130°C. At least 10% by weight of alkyl halide based on the weight of magnesium metal must be present during thermal activation.

The temperature ranges quoted above are not critical to any of the reactions. The minimum temperature is dictated largely by process economics, while the maximum temperature is limited only by the possibility of alkyl halide decomposition and considerations of energy conservation.

Preferably, the compositions are manufactured by a process in which the various alkyl halides are reacted simultaneously, in the desired proportions, with the magnesium. Alternatively, the higher alkyl halide is first contacted with the magnesium, and then the remaining alkyl halides are added as a mixture.

Following any of the above procedures, the solids can be removed from the reaction mixture by any conventional technique, for example, centrifuging, decanting or filtration. The resulting solution of dialkylmagnesium compounds can then be diluted or concentrated to give the concentration desired for purposes of reactivity, viscosity, or economic considerations.

The term "halide" as used herein denotes chloride, bromide, or iodide, or combinations thereof. Chlorides are generally preferred for reasons of economy.

The mole ratio of magnesium to alkyl halide can be varied over a wide range. No particular range is critical to the performance of any of the reactions. Normally, however, the starting materials will be such that the mole ratio of magnesium to total halides is from 1.0 to 2.0, preferably from 1.1 to 1.3. The excess magnesium inherent in mole ratios greater than 1.0 is effective in minimizing Wurtz coupling reactions.

The hydrocarbon solvent may be added before, during, or after the reaction. It will be most convenient to add the solvent prior to or during the reaction of the first added alkyl halide with magnesium so that further reaction is less inhibited by viscosity.

Magnesium alkyls are pyrophoric substances, capable of spontaneous ignition upon contact with air. To prevent such ignition, and also to prevent oxidation of the dialkylmagnesiums, the reactions must be

carried out in the absence of more than trace amounts of oxygen. Thus, the reactions are normally carried out in an atmosphere of inert gas such as nitrogen or argon, or in an atmosphere of an alkyl halide gas. The reactions must also be conducted in the substantial absence of water, due to the reactivity of dialkylmagnesiums with water.

The pressure under which the reactions are conducted is not critical and pressures ranging from atmospheric to elevated pressures of several atmospheres can be employed. The reactions will be most conveniently run at least in slight excess of atmospheric in order to keep the alkyl halides in solution. The preferred pressure range is 8 psig ($1.6\times10^5$ pascals) to 100 psig ($8.0\times10^5$ pascals).

The higher dialkylmagnesiums used contain straight-chain alkyl groups of 5 to 15 carbon atoms. Examples of such compounds are di-n-amylmagnesium, di-n-hexylmagnesium and di-n-octylmagnesium. In these compounds, the two alkyl groups are preferably identical.

For example, a composition according to this invention containing diethyl-, di-n-butyl-, and di-n-hexyl magnesiums, could have as little as 5 mole percent di-n-hexylmagnesium and as much as 93 mole percent of di-n-butylmagnesium, with the other lower dialkylmagnesium, diethyl- being present in as little as 2 percent. Most preferably, for use as a polymerization catalyst, the composition will contain a high amount of di-n-butylmagnesium and a lower amount of diethylmagnesium.

The invention is further illustrated by the following examples.

Example 1 (Comparison Example)

This example demonstrates the production of a mixture of dimethyl and diethyl magnesiums according to the prior art, and corresponds to Example 5 of U.S. Patent 4,222,969.

A pressure bottle equipped with a variable diptube, thermowell and stirrer was immersed in an oil bath, purged with nitrogen and charged with 13.0 grams (g) (0.53 g-atom) of magnesium powder. A small amount (0.24 g) of di-n-hexylmagnesium was added to activate the metal and take up any moisture present, together with 184 g of heptane, and the bottle was heated to 100—110°C. While this temperature was maintained, 13.3 g (0.21 mole) of ethyl chloride was added slowly over a period of two hours.

Following the ethyl chloride addition, the system temperature was raised to 130—136°C and methyl chloride was added in a quantity of 6.6 g (0.13 mole) over a period of two hours. The reaction mixture was then held at 130°C for six hours.

The solids in the reaction mixture were then allowed to settle and the clear hydrocarbon phase was sampled. Analysis of the sample indicated only 0.03 weight percent magnesium, or about 1.5% of theoretical yield.

The solids were then solubilized by the addition of tri-n-octylaluminum. Analysis of the resulting solution indicated 0.83 weight percent magnesium, or about 40% yield, with a methane:ethane mole ratio of 0.3:1 in the hydrolysis gas, indicating that both dimethylmagnesium and diethylmagnesium had been made as an insoluble mixture.

Example 2 (Comparison Example)

Production of a composition comprising dimethyl-, diethyl- and di-n-amyl magnesiums

Using the apparatus and general procedure described in Example 1, the following alkyl chlorides were charged to the pressure bottle, in the order and relative mole percent listed: n-amyl chloride (19%), ethyl chloride (19%), methyl chloride (62%). Analysis of the viscous supernatant liquid showed a magnesium content of 1.18%, corresponding to a yield of soluble magnesium alkyls of 41%. Analysis of the volatile hydrocarbons resulting from hydrolysis showed 43% methane, 35% ethane, and 22% n-pentane. The calculated amount of magnesium in this soluble dimethyl/diethyl/di-n-amyl magnesium composition is 27.4%. The lower dialkylmagnesiums in this composition comprise 81 mole percent, and the di-n-amylmagnesium, 19 mole percent.

Examples 3—7

Following the same procedure described above, the following experiments were performed using mixtures of ethyl, n-butyl and n-hexyl chlorides, and for comparison, mixtures containing only ethyl and n-butyl chlorides. In all such mixtures, the mole ratio of ethyl:n-butyl chlorides ranged from 1:3 up to 1:18, that is, quite disproportionate as compared to the preferred ratio of 1:1 in U.S. Patent 4,127,507. As can be seen from the results, addition of relatively small amounts of n-hexyl chloride (ranging from 5 to 13 mole percent) resulted in substantially higher yields of soluble magnesium alkyl as compared to experiments without n-hexyl chloride.

| Example No. | Mole % alkyl chloride charged: Ethyl chloride | n-Butyl chloride | n-Hexyl chloride | Yield of soluble magnesium alkyl, % |
|---|---|---|---|---|
| 3 (comparison) | 27 | 73 | 0 | 38 |
| 4 (invention) | 12 | 75 | 13 | 76 |
| 5 (comparison) | 11 | 89 | 0 | 5 |
| 6 (invention) | 5 | 90 | 5 | 68 |
| 7 (invention) | 2 | 92 | 6 | 70 |

Thus, in Example 5 for instance, an attempt to make a dialkylmagnesium composition containing di-n-butyl and diethyl magnesiums at a mole ratio of approximately 8:1 produced only a 5% yield of soluble magnesium alkyls without the addition of a higher alkyl compound. However, as shown by Example 6, the inclusion in the reaction mixture of only 5 mole percent n-hexyl chloride resulted in the production of a good yield of a hydrocarbon soluble dialkylmagnesium composition containing a very high content (90 mole %) of di-n-butylmagnesium.

**Claims**

1. A hydrocarbon solution characterised in that it comprises:
(a) di-(*n*-butyl)magnesium;
(b) diethylmagnesium;
(c) at least one further dialkylmagnesium compound in which the alkyl groups are straight-chain containing from 5 to 15 carbon atoms; and
(d) a solvent selected from aliphatic, cycloaliphatic and aromatic hydrocarbons containing from 5 to 20 carbon atoms; components (a), (b) and (c) being present in respective molar amounts of: from 70 to 93 mole percent of di(*n*-butyl)magnesium; from 2 to 20 mole percent of diethylmagnesium; and from 5 to 25 mole percent of component (c).

2. A composition as claimed in claim 1 wherein the components are present in respective molar amounts of from 70 to 93 mole percent of di-(*n*-butyl)magnesium; from 2 to 20 mole percent of diethylmagnesium; and from 5 to 13 mole percent of component (c).

3. A composition as claimed in claim 1 or claim 2 wherein the components are present in respective molar amounts of from 90 to 93 mole percent di-(*n*-butyl)magnesium; from 2 to 5 mole percent of diethylmagnesium; and from 5 to 6 mole percent of component (c).

4. A composition as claimed in any of claims 1 to 3 wherein component (c) comprises di-*n*-amylmagnesium.

5. A composition as claimed in any of claims 1 to 4 wherein component (c) comprises di-*n*-hexylmagnesium.

6. A process for the production of a hydrocarbon solution as claimed in any of claims 1 to 5 characterised in that it comprises:
(a) reacting, in the presence of a hydrocarbon solvent, magnesium metal with an alkyl halide in which the alkyl group is a straight-chain alkyl having from 5 to 15 carbon atoms;
(b) either simultaneously with step (a) or subsequent thereto, reacting, in the presence of the solvent of step (a), further magnesium metal with an *n*-butyl halide;
(c) either simultaneously with step (a) and/or step (b) or subsequent thereto, reacting with further magnesium metal, an ethyl halide forming a mixture of a hydrocarbon solution containing dialkylmagnesium compounds and undissolved solids; and
(d) separating the hydrocarbon solution from the undissolved solids;
all steps being conducted in a substantial absence of both moisture and oxygen.

7. A process as claimed in claim 6 wherein the hydrocarbon solvent is selected from aliphatic, cycloaliphatic and aromatic hydrocarbons containing from 5 to 20 carbon atoms.

8. A process as claimed in claim 6 or claim 7 wherein the alkyl halide is an alkyl chloride.

**Patentansprüche**

1. Kohlenwasserstofflösung, dadurch gekennzeichnet, daß sie
a) Di(n-butyl)magnesium,
b) Diethylmagnesium,
c) mindestens eine weitere Dialkylmagnesiumverbindung mit geradkettigen Alkylgruppen mit 5 bis 15 Kohlenstoffatomen und

d) ein unter aliphatischen, cycloaliphatischen und aromatischen Kohlenwasserstoffen mit 5 bis 20 Kohlenstoffatomen ausgewähltes Lösungsmittel enthält;

wobei die Komponenten a), b) und c) in den jeweiligen molaren Mengen: 70 bis 93 Mol-% des Di(n-butyl)magnesiums, 2 bis 20 Mol-% des Diethylmagnesiums sowie 5 bis 25 Mol-% der Komponente c) vorhanden sind.

2. Zusammensetzung nach Anspruch 1, in der die Komponenten in den jeweiligen molaren Mengen von 70 bis 93 Mol-% des Di(n-butyl)magnesiums, 2 bis 20 Mol-% des Diethylmagnesiums sowie 5 bis 13 Mol-% der Komponente c) vorhanden sind.

3. Zusammensetzung nach Anspruch 1 oder 2, in der die Komponenten in den jeweiligen molaren Mengen von 90 bis 93 Mol-% des Di(n-butyl)magnesiums, 2 bis 5 Mol-% des Diethylmagnesiums sowie 5 bis 6 Mol-% der Komponente c) vorhanden sind.

4. Zusammensetzung nach einem der Ansprüche 1 bis 3, in der die Komponente c) Di(n-amyl)magnesium enthält.

5. Zusammensetzung nach einem der Ansprüche 1 bis 4, in der die Komponente c) Di(n-hexyl)magnesium enthält.

6. Verfahren zur Herstellung einer Kohlenwasserstofflösung entsprechend einem der Ansprüche 1 bis 5, dadurch gekennzeichnet, daß es die folgenden Verfahrensschritte umfaßt:

a) Umsetzung von metallischem Magnesium mit einem Alkylhalogenid mit einer geradkettigen Alkylgruppe mit 6 bis 15 Kohlenstoffatomen in Gegenwart eines Kohlenwasserstofflösungsmittels,

b) gleichzeitig mit Schritt a) oder daran anschließend erfolgende Umsetzung von weiterem metallischen Magnesium mit einem n-Butylhalogenid in Gegenwart des Lösungsmittels aus Schritt a),

c) gleich zeitig mit Schritt a) und/oder Schritt b) oder daran anschließend erfolgende Umsetzung von weiterem metallischen Magnesium mit einem Ethylhalogenid, wobei eine Mischung einer Dialkylmagnesiumverbindungen enthaltenden Kohlenwasserstofflösung und ungelöster Feststoffteilchen entsteht, und

d) Abtrennung der Kohlenwasserstofflösung von den ungelösten Feststoffteilchen.

und daß alle Schritte unter weitgehendem Ausschluß von Feuchtigkeit und Sauerstoff durchgeführt werden.

7. Verfahren nach Anspruch 6, bei dem das Kohlenwasserstofflösungsmittel unter aliphatischen, cycloaliphatischen und aromatischen Kohlenwasserstoffen mit 5 bis 20 Kohlenstoffatomen ausgewählt ist.

8. Verfahren nach Anspruch 6 oder 7, bei dem das Alkylhalogenid ein Alkylchlorid ist.

**Revendications**

1. Une solution hydrocarbonée caractérisée en ce qu'elle comprend:

(a) di-(n-butyl)magnésium

(b) diéthylmagnésium

(c) au moins un autre dérivé de dialkylmagnésium dans lequel les groupes alkyles sont des radicaux à chaîne droite renfermant de 5 à 15 atomes; et

(d) un solvant choisi parmi les hydrocarbures aliphatiques, cycloaliphatiques et aromatiques renfermant de 5 à 20 atomes de carbone;

les composants (a), (b) et (c) étant présents en les quantités molaires respectives suivantes: de 70 à 93 moles % de di-(n-butyl)magnésium; de 2 à 20 moles % de diéthylmagnésium et de 5 à 20 moles% de composants (c).

2. Une composition selon la revendication 1, dans laquelle les composants sont présents en les quantités molaires respectives suivantes: de 70 à 93 moles% de di-(n-butyl)magnésium; de 2 à 20 moles% de diéthylmagnésium et de 5 à 13 moles% de composants (c).

3. Une composition selon la revendication 1 ou la revendiction 2, dans laquelle les composants sont présents en les quantités molaires respectives suivantes: de 90 à 93 moles % de di-(n-butyl)magnésium; de 2 à 5 moles % de diéthylmagnésium et de 5 à 6 mole % de composants (c).

4. Une composition selon l'une quelconque des revendications 1 à 3, dans lequel le composant (c) est constitué de di-n-amylmagnésium.

5. Une composition selon l'une quelconque des revendications 1 à 4, dans lequel le composant (c) est constitué de di-n-hexylmagnésium.

6. Un procédé de préparation d'une solution hydrocarbonée selon l'une quelconque des revendications 1 à 5, caractérisé en ce qu'il consiste:

(a) à faire réagir, en présence d'un solvant hydrocarboné, du magnesium métallique avec un halogénure d'alkyle dans lequel le groupe alkyle est un radical alkyle à chaîne droite renfermant de 5 à 15 atomes de carbone;

(b) à faire réagir, soit simultanément avec l'étape (a), soit à la suite de celle-ci, en présence du solvant de l'étape (a), un supplément de magnésium métallique avec un halogénure de n-butyle;

(c) à faire réagir, soit simultanément avec l'étape (a), et/ou avec l'étape (b) ou successivement ces étapes, un supplément de magnésium métallique avec un halogénure d'éthyle formant un mélange de solution hydrocarbonée contenant des dérivés de dialkylmagnésium et des solides non dissous;

(d) à séparer la solution hydrocarbonée de solides non dissous;

toutes ces étapes étant mises en oeuvre sensiblement en l'absence à la fois d'humidité et d'oxygène.

7. Un procédé selon la revendication 6, dans lequel le solvant hydrocarboné est choisi parmi les hydrocarbures aliphatiques, cyclo-aliphatiques et aromatiques renfermant de 5 à 20 atomes de carbone.

8. Un procédé selon la revendication 6 ou 7, dans lequel l'halogénure d'alkyle est un chlorure d'alkyle.